**Europäisches Patentamt**

**European Patent Office**

**Office européen des brevets**

(19)

(11) Publication number : **0 408 503 B1**

(12) # EUROPEAN PATENT SPECIFICATION

(45) Date of publication of patent specification :
**01.06.94 Bulletin 94/22**

(51) Int. Cl.⁵ : **C08L 3/02, // (C08L3/02, 29:04, 23:08)**

(21) Application number : **90810508.3**

(22) Date of filing : **05.07.90**

(54) **Polymer base blend compositions containing destructurized starch.**

(30) Priority : **11.07.89 US 378536**
**08.12.89 US 449095**

(43) Date of publication of application :
**16.01.91 Bulletin 91/03**

(45) Publication of the grant of the patent :
**01.06.94 Bulletin 94/22**

(84) Designated Contracting States :
**AT BE CH DE DK ES FR GB GR IT LI LU NL SE**

(56) References cited :
**EP-A- 0 327 505**
**EP-A- 0 400 532**
**FR-A- 2 617 857**
**US-A- 3 652 542**

(73) Proprietor : **WARNER-LAMBERT COMPANY**
**201 Tabor Road**
**Morris Plains New Jersey 07950 (US)**

(72) Inventor : **Silbiger, Jakob, Dr.**
**Oberwilerstrasse 72**
**CH-4055 Basel (CH)**
Inventor : **Lentz, David, Dr.**
**23 Timber Lane**
**Ranolph, N.J. 07869 (US)**
Inventor : **Sachetto, Jean-Pierre, Dr.**
**Duechelweiher 20**
**CH-4144 Arlesheim (CH)**

(74) Representative : **Silbiger, Jakob**
**c/o André Braun**
**European Patent Attorney**
**Murtengasse 5**
**CH-4051 Basel (CH)**

EP 0 408 503 B1

## Description

The present invention relates to polymer compositions capable of being formed by heat and pressure into articles having dimensional stability and enhanced physical properties, and to pre-mixes useful for preparing these compositions. These compositions and pre-mixes comprise destructurized starch and other polymers as described herein.

It is known that natural starch which is found in vegetable products and which contains a defined amount of water can be treated at an elevated temperature and in a closed volume, thereby at elevated pressures, to form a melt. The process is conveniently carried out in an injection molding machine or extruder. The starch is fed through the hopper onto a rotating, reciprocating screw. The feed material moves along the screw towards the tip. During this process, its temperature is increased by means of external heaters around the outside of the barrel and by the shearing action of the screw. Starting in the feed zone and continuing in the compression zone, the particulate feed becomes gradually molten. It is then conveyed through the metering zone, where homogenization of the melt occurs, to the end of the screw. The molten material at the tip can then be treated further by injection molding or extrusion or any other known technique to treat thermoplastic melts, to obtain shaped articles.

This treatment, which is described in the European Patent Application No. 84 300 940.8 (Publication No. 118 240) which patent is incorporated herein by reference, yields a substantially destructurized starch. As described in the above mentioned patent, the reason for this is that the starch is heated above the glass transition and the melting temperatures of its components. As a consequence, a melting and disordering of the molecular structure of the starch granules takes place, so that a substantially destructurized starch is obtained. The expression "destructurized starch" defines starch obtained by such thermoplastic melt formation. Reference is also made to European Patent Applications No. 88810455.1 (Publication No. 298,920), No. 88810548.3 (Publication No. 304,401) and No. 89810046.6 (Publication No. 326,517) which further describe destructurized starch, methods for making it, and uses of it. These application are also incorporated herein by reference.

It is preferred that the destructurized starch used in the present invention has been heated to a high enough temperature and for a time long enough so that the specific endothermic transition analysis as represented by a differential scanning calorimetry (DSC) curve indicates that a specific relatively narrow peak just prior to oxidative and thermal degradation has disappeared, as described in the above-mentioned European Patent Application No. 89810046.6 (Publication No. 326 517).

Destructurized starch is a new and useful material for many applications. An important property is its biodegradability. In humid air, however, destructurized starch takes up water from the air, thereby increasing its moisture content. As a consequence, a shaped article made from destructurized starch may under such conditions lose its dimensional stability. On the other hand such an article may dry out in low humidity and become brittle.

Thermoplastic starch has a unique set of properties and while these are very useful, they may limit its utility in cases where a softer, more resilient or harder, tougher polymer is desired.

Thermoplastic starch as mentioned can be extruded and molded into numerous useful shapes and profiles. However, the processing parameters such as water content, temperature, and pressure are critical and must be narrowly controlled to achieve reproducible quality products. This is a further disadvantage for many applications.

To overcome these potential limitations, it would be useful to increase the dimensional stability over a wide humidity range; to increase the toughness (measured as break energy); to increase the elasticity (measured as elongation); to decrease polymer stiffness (measured as Young's modulus) and increase the hardness.

Broadening processing latitude increases the variety of shapes and composites and decreases the need for close controls. It would therefore also be useful to improve the control of the melt strength, e.g. increasing the processing latitude for extruding, injection molding, film blowing or fiber drawing and to control the surface tack and adhesion to other substrates.

Conventional thermoplastic materials are hydrophobic, substantially water-insoluble polymers which are conventionally processed in the absence of water and volatile materials. Starch to the contrary forms a melt in the presence of water but decomposes at elevated temperature, i.e. around 240°C. It was therefore expected that such a starch melt could not be used as a thermoplastic component together with hydrophobic, substantially water-insoluble polymeric materials not only because starch forms a melt in the presence of water as described above, but also because of its chemical structure and hydrophilic nature.

EP-A-0 118 240 as mentioned herein above discloses destructurized starch and method for its production. EP-A-0 400 532 filed prior to the filing date of the present invention and published on December 5, 1990, refers to a composition comprising ethylene/vinyl alcohol copolymers and destructurized starch. The composition may optionally further contain an ethylene/acrylic acid copolymer or polyvinylalcohol.US-A-3 652 542 refers to a process for preparing an etherified depolymerized starch product. EP-A-0 327 505 was filed prior to the filing date of the present invention and published on August 9, 1989. This document discloses compositions comprising a water containing destructurized starch and at least one essentially water-insoluble synthetic thermoplastic polymer. FR-A-2 617 857 refers to compositions comprising ethylene polymers, organic salts of a transition metal, preferably a fatty acid, in order to enhance the oxidation of the ethylene polymer and a filler, for example starch. The starch in this composition is a filler and nothing is mentioned about destructurizing the starch. None of the documents cited refers to three component systems comprising the components a), b) and c) as defined in the present invention.

It has now been found that starch, when heated in a closed volume at proper moisture and temperature conditions as described above to form a melt of destructurized starch, is substantially compatible in its processing with melts formed by hydrophobic substantially water insoluble thermoplastic polymers and that the two types of molten materials show an interesting combination of properties, especially after the melt has solidified.

One very important aspect is the surprisingly improved dimensional stability of such destructurized starch blended with such hydrophobic thermoplastic materials. Such polymer compositions are described in copending European Patent Application No. 89810078.9 (Publication No. 327,505), which is incorporated herein by reference. Although articles made from such compositions possess better dimensional stability than those made from destructurized starch alone, the physical properties of the therein-described compositions are not as good as might be desired for some end uses. In particular, it is important that articles made from destructurized starch compositions retain sufficient strength and dimensional stability to perform their desired function while still being biodegradable after disposal.

It has now been found that articles made from such destructurized starch blended with specific hydrophobic thermoplastic materials as described herein show a surprising increase in all or a part of their physical properties and behaviour of their melts as to overcome the limitations as explained above. Moreover it was surprisingly found that many of the blends described herein show a significantly improved dimensional stability in humid air compared with non-blended destructurized starch whilst retaining a surprisingly high degree of disintegration in contact with liquid water which in consequence leads to a high degree of biodegradability.

In order to achieve such properties, it has been found useful to make polymer compositions comprising: a) destructurized starch, b) at least one polymer selected from the group of copolymers containing vinyl alcohol units together with aliphatic chain units as are obtained by copolymerization of vinyl esters, preferably vinyl acetate, with unsaturated monomers containing no functional group with subsequent hydrolysis of the vinyl ester group, (referred to herein as "component b)"), and optionally c) a substantially water-insoluble polymer different from those defined as component b). In one aspect, the present invention relates to a composition comprising destructurized starch and component b). This composition is useful itself for making finished articles, but it is primarily useful as a "pre-mix" for combining with the substantially water-insoluble polymer. In a second aspect, the invention comprises the ternary composition of destructurized starch, component b), and at least one substantially water-insoluble polymer (component c)). These compositions may be in the form of powdery mixtures of the components, melts, or solid forms. The invention also includes methods for making and using both above described compositions and shaped articles made therefrom.

Specifically the present invention refers to a composition consisting of

a) destructurized starch produced by heating a starch having a water content of 5 to 40% by weight based on the starch/water component, in a closed volume under shear; and at a temperature of 105°C to 190°C above the glass transition and the melting points of its components and at a pressure of up to 150 x 10⁵ N/m² to form a melt whereby the pressure corresponds at a minimum to the vapour pressure of water at the temperature used and heating the melt for a time long enough to obtain a melting of the molecular structure of the starch granules and a homogenization of the melt;

b) at least an ethylene/vinylalcohol copolymer or a propylene/vinylalcohol copolymer, wherein the molar ratio of vinylalcohol units to alkylene is from 10:90 to 90:10 and which optionally further contain 5% to 20% polystyrene units calculated to the total weight of the polymer;

c) a thermoplastic polymer which undergoes melt formation at a set processing temperature within the range of 95°C to 190°C and is selected from (i) the group consisting of polyolefines, vinyl polymers, polystyrenes, polyacrylonitriles, polyacrylates, polymethacrylates, polyacetals, polyamides, thermoplastic polyesters, thermoplastic polyurethanes, polycarbonates, polyarylethers, thermoplastic polyimides, (ii) alkylene/vinyl ester-copolymers, ABS-copolymers, styrene/acrylonitrile-copolymers, alkylene/maleic anhydride-copolymers, acrylic acid esters/ acrylonitrile copolymers, acrylamide/acrylonitrile copolymers, block copolymers of amide-ethers, amide-esters, block copolymers of urethane-esters and mixtures thereof;

d) optionally one or more materials selected from the group consisting of fillers, lubricants, mold release agents, plasticizers, foaming agents, stabilizers, flow accelerators, coloring agents, pigments and mixtures thereof;

wherein the ratio of destructurized starch to component b) is from 1:99 to 99:1 and the sum of the components a) and b) is 90% or less and at minimum 10% by weight of the entire composition.

The present invention includes said polymer compositions in the form of powdery mixtures of their components, in the form of melts, or in solidified form.

Component b) is chosen as described herein to be substantially compatible with the starch and also to promote the compatibility of component c) with the combination of starch and component b).

The present invention further refers to a method of producing said polymer compositions in the molten or solid form as well as a method of producing shaped articles from said polymer compositions, and to the resulting shaped articles made therefrom.

The polymer compositions of the present invention are prepared by admixing destructurized starch, component b) and optionally component c) and any further additives. This mixture is then heated in a closed volume to elevated temperatures until a homogeneous melt is obtained, and shaped articles can be formed therefrom.

An alternate method of producing the polymer compositions of the present invention comprises: Heating starch which is in a condition to be destructurized in a closed volume to elevated temperatures and at elevated pressures for a time sufficient to destructurize the starch and form a melt; adding component b) as well as other polymer or polymers and/or additives before, during or after such starch destructurization; and continuing to heat the mixture until a homogenous melt is obtained. It is preferred that component b) and, if desired, component c), as well as other additives be combined with the starch and the combination formed into a melt. The starch in this combination may be already wholly or partially destructurized or the destructurization may take place during melt formation.

The present invention further refers to the process of working said polymer composition under controlled water content, temperature and pressure conditions as a thermoplastic melt wherein said working process is any known process, such as, for example injection molding, blow molding, extrusion, coextrusion, compression molding, vacuum forming, thermoforming or foaming. All of these processes are collectively referred to herein as "forming".

The term "starch" as used herein includes chemically substantially non-modified starches as for example carbohydrates of natural, vegetable origin, composed mainly of amylose and/or amylopectin. They can be extracted from various plants, examples being potatoes, rice, tapioca, corn (maize), pea, and cereals such as rye, oats and wheat. Preferred is starch made from potatoes, corn, wheat or rice. Mixtures of starches obtained from these sources are contemplated. It further includes physically modified starches such as gelatinized or cooked starches. It further includes pre-extruded starches, as described in the above-referenced European Patent Application No. 89810046.6 (Publication No. 326,517).

As described above, it has been found that starches, e.g. with a water content within the range of about 5 to about 40 % by weight based on the weight of the composition, undergo a specific narrow endothermic transition on heating to elevated temperatures and in a closed volume just prior to the endotherm change characteristic of oxidative and thermal degradation. The specific endothermic transition can be determined by differential scanning calorimetric analysis (DSC) and is indicated on the DSC-diagram by a specific relatively narrow peak just prior to the endotherm characteristic of oxidative and thermal degradation. The peak disappears as soon as the mentioned specific endothermic transition has been undergone. The term "starch" includes also treated starches wherein said specific endothermic transition has been undergone. Such starch is described in the European Patent Application 89810046.6 (Publication No. 326,517).

Although at the current time, destructurization of starch requires the presence of water in ranges disclosed herein, the present compositions also contemplate the sue of destructurized starch prepared by other methods, e.g. without the use of water.

The water content of such a starch/water composition is preferably about 5 to about 40 % water by weight of the starch/water component and preferably about 5 to about 30 %. However, in order to work with the material near its equilibrium water content to which it gets when it is finally exposed to the free atmosphere, a water content of about 10 to about 22 %, preferably of about 14 to about 18 % by weight calculated based on the starch/water component should be used in processing and is preferred.

The copolymer of the component b) is preferably a synthetic copolymer containing vinyl alcohol units as well as aliphatic units as are obtained by copolymerization of vinyl esters preferably vinyl acetate with monomers preferably ethylene, propylene, and/or styrene with subsequent hydrolysis of the vinyl ester group. Such copolymers and their derivatives are known.

Copolymers thus obtained may have a general formula wherein the number of repeating units varies for each individual type of copolymer and is known per se as e.g. described in "Encyclopaedia of Polymer Science and Technology, Interscience Publ. Vol. 14, 1971".

Preferred copolymers of component b) are those containing vinyl alcohol units and aliphatic chain units as obtained by copolymerization with ethylene and/or propylene, preferably with ethylene.

Such polymers are ethylene/vinyl alcohol copolymers (EVAL), propylene/vinyl alcohol copolymers.

Preferred are the ethylene/vinyl alcohol copolymers. The molar ratio of vinyl alcohol units to alkylene is preferably from about 10 : 90 to about 90 : 10. Preferred is a ratio of about 50 : 50 to about 85 : 15 and most preferred about 60 : 40 to about 81 : 19.

A further embodiment of the present invention are those compounds of component b) as named hereinbefore which further contain about 5 to 20 % of polystyrene units calculated to the total weight of the polymer.

As mentioned above, the polymer composition comprising the components a) and b) optionally contains one or more substantially water-insoluble hydrophobic polymers (component c), as well as further additives.

The component c) is a substantially water-insoluble polymer or a mixture of such substantially water-insoluble polymers. Component c) is preferably present in an amount effective to enhance the physical properties of articles made from the composition of the invention (which amount is sometimes referred to herein as an "effective amount" of component c)), for example increase of dimensional stability of final products made therefrom or adjust the degree of biodegradability.

As used herein a "substantially water-insoluble thermoplastic polymer" is a polymer which preferably absorbs less than 10 % of water, preferably less than 5 % per 100 grams of the polymer at room temperature and preferably at a rate of less than 2 % per 100 grams of the polymer at room temperature.

Examples of substantially water-insoluble thermoplastic materials are polyolefines, such as polyethylene (PE), polyisobutylenes, polypropylenes; vinyl polymers such as poly(vinyl acetates); polystyrenes; polyacrylonitriles (PAN); substantially water-insoluble polyacrylates or polymethacrylates; polyacetals; thermoplastic polycondensates such as polyamides (PA), polyesters, polyurethanes, polycarbonates, poly(alkylene terephthalates); polyarylethers and thermoplastic polyimides.

Further included are substantially water-insoluble thermoplastic copolymers known such as alkylene/vinyl ester-copolymers preferably ethylene/vinyl acetate-copolymers (EVA); ABS-copolymers; styrene/acrylonitrile-copolymers (SAN); ethylene/maleic anhydride copolymers, acrylic acid esters/acrylonitrile copolymers; acrylamide/acrylonitrile copolymers; block copolymers of amide-ethers, amide-esters; block copolymers of urethane-ethers, urethane-esters; as well as mixtures thereof.

Preferred from these are those which undergo melt formation at a set processing temperature preferably within the range of 95°C to about 190°C.

Also preferred are those polymers containing polar groups such as ether, amide, or urethane groups. Such polymers include e.g. copolymers of ethylene, propylene or isobutylene with vinyl compounds containing functional groups such as styrene/acrylo- nitrile-copolymers (SAN); block copolymers of amide-ethers, amide-esters; block copolymers of urethane-ethers, urethane-esters; as well as their mixtures.

Such substantially water-insoluble thermoplastic polymers may be added in any desired amount as described herein.

Such polymers may be used in any known form. Their molecular weight is also generally known in the art. It is also possible to use such polymers of relatively low molecular weight (oligomers). The choice of a particular molecular weight range is a matter of optimization and routine experimentation known to the one skilled in the art.

In the composition according to this invention, the two components a) and b) or the three components a), b) and c) always add up to 100 % and the values of the components given in percent hereinbelow refer to the sum of 100 %.

The ratio of destructurized starch to component b) and optionally to the sum of components b) and c) can be 1:99 to 99:1. It is however preferred that the destructurized starch contributes noticeably to the properties of the final material. Therefore, it is preferred that the destructurized starch is present in an amount of at least about 10 %, more preferably about 50 % and most preferably in the range of about 60 % to about 90 % by weight of the entire composition. That is, component b) is and optionally the sum of the components b) and c) are present in amounts of about 90 % or less, more preferably less than or equal to about 50 % and most preferably in the range of about 40 % to about 10 % by weight of the entire composition.

Component b) is a relatively polar material. When it functions in the present compositions in combination with component c), it is able to mix more readily with a more polar component c) than with a less polar one. Accordingly, with more polar components c), relatively less of component b) will be required than with less polar ones. The skilled worker will be able to select appropriate ratios of components b) and c) to obtain a substantially homogenous melt composition.

If the destructurized starch contains water, the percentage of this destructurized starch component is meant to be the destructurized starch/water component, i.e. including the weight of water.

The starch may be mixed prior to destructurization with additives as named hereinbelow to yield a free flowing powder useful for continuous processing and is destructurized and granulated before it is mixed with component b) or b) and c) or the other optionally added components. The other components to be added are preferably granulated to a granular size equal to that of the granulated destructurized starch.

However, it is possible to process native starch or pre-extruded and/or destructurized granulated or powdered starch together with powdered or granulated additives and/or the polymeric material in any desired mixture or sequence.

Thus, it is preferred that components a), b) and c) as well as other conventional additives be mixed in a standard mixer. This mixture can then be passed through an extruder to produce granulates or pellets as one form of shaped articles which are also useful as starting material for processing into other articles. However, it is possible to avoid granulating and to process the obtained melt directly using down-stream equipment to produce films, blown films included, sheets, profiles, pipes, tubes, foams or other shaped articles. The sheets can be used for thermoforming.

It is preferred that fillers, lubricants and/or plasticizers be added to the starch before destructurization. However the addition of coloring agents as well as of the components b), c) and additives other than the aforementioned can be added before, during or after destructurization.

The substantially destructurized starch/water component or granules have a preferred water content in the range of 10 to 22 % by weight of the starch/water component, preferably 12 to 19 % and most preferably 14 to 18 % by weight of the starch/water component.

The water content described above refers to the percentage of water relative to the weight of the starch/water component within the total composition and not to the weight of the total composition itself, which would include also the weight of any added substantially water-insoluble thermoplastic polymer.

In order to destructurize the starch and/or to form a melt of the new polymeric composition according to this invention, it is suitably heated in a screw and barrel of an extruder for a time long enough to effectuate destructurization and melt formation. The temperature is preferably within the range of 105°C to 190°C depending on the type of starch used. For this destructurization and melt formation, the composition is heated in a closed volume. A closed volume can be a closed vessel or the volume created by the sealing action of the unmolten feed material as happens in the screw and barrel of injection molding or extrusion equipment. In this sense the screw and barrel of an injection molding machine or an extruder is to be understood as being a closed vessel. Pressures created in a closed vessel correspond to the vapour pressure of water at the used temperature but of course additional pressure may be applied and/or generated as normally occurs in a screw and barrel. The preferred applied and/or generated pressures are in the range of pressures which occur in extrusion and are known $\underline{per\ se}$, e.g. from 5 to 150 x $10^5$ N/m$^2$ preferably from 5 to 75 x $10^5$ N/m$^2$ and most particularly from 5 to 50 x $10^5$ N/m$^2$ If the thus-obtained composition is comprised only of destructurized starch, it may be granulated and ready to be mixed with the further components according to a chosen mixing and processing procedure to obtain the granular mixture of the destructurized starch/polymer starting material to be fed to the screw barrel.

However, the obtained melt in the screw and barrel may be injection molded directly into a suitable mold, i.e. directly further processed to a final product if all necessary components are already present.

Within the screw, the granular mixture obtained as described above is heated to a temperature which is generally within the range of 130°C to about 190°C. Preferably, such mixture is heated to a sufficiently high temperature and for a time long enough until the endothermic transition analysis (DSC) indicates that the specific relatively narrow peak just prior to the endotherm characteristic of oxidative and thermal degradation of starch has disappeared.

The minimum pressures under which the melts are formed correspond to the water vapour pressures produced at said temperatures. The process is carried out in a closed volume as explained above, i.e. in the range of the pressures which occur in extrusion or molding processes and known per se, e.g. from zero to 150 x $10^5$ N/m$^2$ preferably from zero to 75 x $10^5$ N/m$^2$ and most particularly from zero to 50 x $10^5$ N/m$^2$.

When forming a shaped article by extrusion the pressures are preferably as mentioned above. If the melt according to this invention is, e.g., injection molded, the normal range of injection pressures used in injection molding is applied, e.g. from 300 x $10^5$ N/m$^2$ to 3000 x $10^5$ N/m$^2$ and preferably from 700 x $10^5$ to 2200 x $10^5$ N/m$^2$.

Accordingly, the present invention provides a thermoplastic destructurized starch product formed by the process comprising:

1) providing a mixture consisting of:

- a starch composed mainly of amylose and /or amylopectin and having a water content of from 5% to 40% by weight;
- at least one polymer as defined herein above as component b);
- a thermoplastic polymer as defined herein above as component c);

- optionally one or more additives as defined herein above as component c)

wherein the ratio of destructurized starch to component b) is from 1:99 to 99:1 and the sum of the components a) and b) is 90% or less and at minimum 10% by weight of the entire composition,

2) heating said mixture in the screw and barrel of an injection molding machine or an extruder at a temperature of 105°C to 190°C and at a pressure of up to 150 x $10^5$ N/m$^2$ to form a melt and heating the melt for a time long enough to obtain a destructurization of the starch and a homogenization of the melt;

3) shaping the melt into an article; and

4) allowing the shaped article to cool to a solidified dimensionally stable article.

The mixture provided in step 1) of either above-described processes may additionally contain component c) and additives as described herein.

Various hydrophilic polymers may be used as additives. These include water-soluble and water-swellable polymers. As such it includes animal gelatin, vegetable gelatins proteins such as sunflower protein, soybean proteins, cotton seed proteins, peanut proteins, rape seed proteins, acrylated proteins; water-soluble polysaccharides, alkyl celluloses, hydroxyalkyl celluloses and hydroxyalkylalkyl celluloses, such as methyl cellulose, hydroxymethyl cellulose, hydroxyethyl cellulose, hydroxypropyl cellulose, hydroxyethylmethyl cellulose, hydroxpropylmethyl cellulose, hydroxybutylmethyl cellulose, cellulose esters and hydroxyalkyl cellulose esters such as cellulose acetylphtalate (CAP), hydroxypropylmethyl cellulose (HPMCP); analogous known polymers made from starch; water-soluble or water-swellable synthetic polymers such as: polyacrylates, polymethacrylates, polyvinyl alcohols, shellac and other similar polymers.

Preferred are synthetic polymers, most preferably polyacrylates, polymethacrylates, polyvinyl alcohols.

Such hydrophilic polymers may optionally be added up to 50 % based on the starch/water component, preferably up to 30 % and most preferably between 5 % and 20 % based on the starch/water component. If any hydrophilic polymer is added, its mass should be considered along with the starch in determining the appropriate amount of water in the composition.

Other useful additives may be e.g. adjuvants, fillers, lubricants, mold release agents, plasticizers, foaming agents, stabilizers, coloring agents, pigments, extenders, chemical modifiers, flow accelerators, and mixtures thereof.

Examples for fillers are inorganic fillers, such as the oxides of magnesium, aluminum, silicon, titanium, etc. preferably in a concentration in the range of about 0.02 to 50 % by weight preferably 0.20 to 20 % based on the total weight of all the components.

Examples for lubricants are stearates of aluminum, calcium, magnesium and tin as well as talc, silicones, etc. which may be present in concentrations of 0.1 to 5 % preferably at 0.1 to 3 % based upon the weight of the total composition.

Examples of plasticizers include low molecular poly(alkylene oxides), such as poly(ethylene glycols), poly(propylene glycols), poly(ethylene-propylene glycols); organic plasticizers of low molar masses, such as glycerol, pentaerythritol, glycerol monoacetate, diacetate or triacetate; propylene glycol, sorbitol, sodium diethylsulfosuccinate, etc., added in concentrations ranging from 0.5 to 15 %, preferably ranging from 0.5 to 5 % based on the total weight of all the components. Examples of colouring agents include known azo dyes, organic or inorganic pigments, or colouring agents of natural origin. Inorganic pigments are preferred, such as the oxides of iron or titanium, these oxides, known per se, being added in concentrations ranging from 0.001 to 10 %, preferably 0.5 to 3 %, based on the weight of all the components.

There may further be added compounds to improve the flow properties of the starch material such as animal or vegetable fats, preferably in their hydrogenated form, especially those which are solid at room temperature. These fats have preferably a melting point of 50°C or higher. Preferred are triglycerides of $C_{12}$ -, $C_{14}$ -, $C_{16}$ -, and $C_{18}$ - fatty acids.

These fats can be added alone without adding extenders or plasticizers.

These fats can advantageously be added alone or together with mono- and/or diglycerides or phosphatides, especially lecithin. The mono- and diglycerides are preferably derived from the types of fats described above, i.e. from $C_{12}$ -, $C_{14}$ -, $C_{16}$ -, and $C_{18}$ - fatty acids.

The total amount of fats, mono-, diglycerides and/or lecithins used are up to 5 % and preferably within the range of 0.5 to 2 % by weight of the total weight of starch and any added hydrophilic polymer.

The materials may further contain stabilizers, such as antioxydants, e.g. thiobisphenols, alkylidenbisphenols secondary aromatic amines; light stabilizers such as UV-absorbers and UV-quenchers; hydroperoxide decomposer; free-radical scavengers; stabilizers against microorganisms.

The compositions of the invention form thermoplastic melts on heating and in a closed volume, i.e. under conditions of controlled water-content and pressure. Such melts can be processed just like conventional thermoplastic materials, using, for example, conventional apparatus for injection molding, blow molding, extrusion and coextrusion (rod, pipe and film extrusion), compression molding, foaming, to produce known articles. The articles include bottles, sheets, films, packaging materials, pipes, rods, laminated films, sacks, bags, pharmaceutical capsules, granules, powders or foams.

For example, these compositions may be used to prepare low density packaging materials (e.g. foams) by well-known methods. Conventional blowing agents may be utilized if desired or, for certain compositions, the water itself may act as the blowing agent. Open cell and closed cell foams may be produced as desired by varying the composition and processing condtions. These foams produced from the present compositions will demonstrate improved properties (e.g., dimensional stability, moisture resistance, etc.) when compared with foams made of starch without incorporation of the components b) and c) according to this invention.

These compositions may be used as carrier materials for active substances, and may be mixed with active ingredients such as pharmaceuticals and/or agriculturally active compounds such as insecticides or pesticides for subsequent release applications of these ingredients. The resulting extruded materials can be granulated or worked to fine powders.

The following examples are provided to further explain and exemplify the invention but not to limit the scope thereof, which scope is defined by the appended claims.

Example 1

(a) 9500 g of potato starch containing 15.1 % water are placed in a high speed mixer and 3226 g of polyethylene-co-vinyl alcohol (component b) containing 73 mole % of vinyl alcohol and 27 mole % of ethylene sold as EVAL-L-101 by Kuraray; 80.75 g of hydrogenated fat (lubricant release agent) sold as Boeson VP by Boehringer Ingelheim, 40.37 g of a melt flow accelerator (lecithin) sold as Metarin P by Lucas Meyer are added under stirring. The water content of the final mixture is 11.2 %.

(b) 10,000g of the mixture prepared under (a) are fed through a hopper into a Leistritz co-rotating twin screw extruder (model LSM 34 GL).

The temperature profile of the main sections of the barrel is respectively 25°C/ 90°C/ 180°C/ 200°C/ 160°C/ 120°C/ 130°C.

Extrusion is carried out with a mixture output of 8.8 kg/hr (screw speed 200 rpm). Water is added at the inlet with a flow rate of 2.5 kg/hr. The water content of the material during extrusion is therefore 29 %. In the last section of the extruder 200 mbar reduced pressure is applied to remove part of the water as water vapour.

The water content of the granulates is 8.5 % as measured after they have equilibrated at room temperature. They are brought to a water content of 17 % by spraying water under stirring in a conventional mixer.

(c) The granulates of the pre-blended mixture as obtained under (b) ($H_2O$ content: 17 %) are fed through a hopper to an injection molding machine Kloeckner-Ferromatic FM 60 for the production of tensile test pieces. The temperature profile of the barrel is: 90°C/ 165°C/ 165°C/ 165°C.

The shot weight is 8 g, the residence time 450 sec., the injection pressure 800 bar, the back pressure 30 bar, the screw speed 180 rpm.

The tensile test pieces thus produced are conditioned in a climatic cabinet at 50 % R.H. for five days as an arbitrary standard condition.

The test pieces are of standard ISO design (ISO No. R527).

(d) The conditioned tensile test pieces are then tested for their stress/strain behaviour on a Zwick tensile test apparatus.

The samples are measured at room temperature using an extension rate of 10 mm per minute. Results are presented in Table 1 and compared with those of the tensile test pieces obtained from the same starch processed in a similar way but in absence of component b).

Table 1

| | unblended starch | Example Nos. | | | | |
|---|---|---|---|---|---|---|
| | | 1 | 3 | 4 | 5 | 6 |
| break strain % | 22 | 30 | 17 | 13 | 5 | 4 |
| break energy KJ/m$^2$ | 325 | 520 | 290 | 215 | 73 | 52 |

Example 2

Example 1 is repeated except that the ratio of the components is varied as given in Table 2. For comparison perspective, Example 1 is shown as Blend No. 1.

Table 2

| Blend No. | starch: component b)+c) (weight ratio) | component b): component c) (weight ratio) |
|---|---|---|
| 2 | 50 : 50 | 100 : 0 |
| 3 | 60 : 40 | 99 : 1 |
| 4 | 70 : 30 | 50 : 1 |
| 5 | 80 : 20 | 20 : 1 |
| Ex.1 | 91.5: 8.5 | 10 : 1 |
| 6 | 90 : 10 | 1 : 1 |
| 7 | 94 : 6 | 1 : 10 |
| 8 | 98 : 2 | 1 : 50 |
| 9 | 99 : 1 | 1 : 99 |

The resulting injection molded polymers are tougher and more resistant to humid air than the unmodified starch polymer. The toughness as judged by resistance to breaking upon bending increases from blend 9 to blend 2 in concert with the combined increase in ethylene-vinyl alcohol content. While the resistance to softening in humid atmosphere is improved in all cases relative to unmodified starch, the resistance of blends 1,4,5 and 6 are particularly good. These results illustrate the unexpected combinations as benefits in performance.

## Example 3

Example 1 is repeated by replacing component (b) (EVAL-L-101) with polyethylene-co-vinyl alcohol Clarene L-4 of Solvay containing 71 mole % of vinyl alcohol and 29 mole % of ethylene. The break strain and break energy of the resulting injection molded blend are shown in Table 1. It can be seen that a lower vinyl alcohol content as compared to EVAL-L-101, leads to a decrease in the tensile properties, even lower than those of starch without component b)).

## Example 4

Example 1 is repeated by replacing component b) (EVAL-L-101) with polyethylene-co-vinyl alcohol EVAL-F-101 of Kuraray containing 68 mole % of vinyl alcohol and 32 mole % of ethylene. The break strain and break energy of the resulting injection molded blend are shown in Table 1. It can be seen that a lower vinyl alcohol content as compared to EVAL-L-101, leads to a decrease in the tensile properties, even lower than those of starch without component b).

## Example 5

Example 1 is repeated by replacing component b) (EVAL-L-101) with polyethylene-co-vinyl alcohol EVAL-K-102 of Kuraray containing 62 mole % of vinyl alcohol and 38 mole % of ethylene. The break strain and break energy of the resulting injection molded blend are shown in Table 1. It can be seen that a lower vinyl alcohol content as compared to EVAL-L-101, leads to a decrease in the tensile properties, even lower than those of starch without component b).

## Example 6

Example 1 is repeated by replacing component b) (EVAL-L-101) with polyethylene-co-vinyl alcohol EVAL-E-105 of Kuraray containing 56 mole % of vinyl alcohol and 44 mole % of ethylene. The break strain and break energy of the resulting injection molded blend are shown in Table 1. It can be seen that a lower vinyl alcohol content as compared to EVAL-L-101, leads to a decrease in the tensile properties, even lower than those of starch without component b).

## Example 7

(a) 5000 g of potato starch containing 15 % water are placed in a high speed mixer and 4250 g of polyethylene-co-vinyl alcohol (component b) sold as EVAL-L-101 by Kuraray and containing 73 mole % of vinyl alcohol and 27 mole % of ethylene; 42.5 g of hydrogenated fat (lubricant release agent) sold as Boeson VP by Boehringer Ingelheim, 21.25 g of a melt flow accelerator (lecithin) sold as Metarin P by Lucas Meyer are added under stirring. The water content of the final mixture is 8.1 %.

(b) 9000g of the mixture prepared under (a) are fed through a hopper into a Werner & Pfleiderer co-rotating twin screw extruder (model Continua 37).

The temperature profile of the four sections of the barrel is respectively 20°C/ 80°C/ 190°C/ 150°C.

Extrusion is carried out with a mixture output of 8.8 kg/hr (screw speed 200 rpm). Water is added at the inlet with a flow rate of 2.5 kg/hr. The water content of the material during extrusion is therefore 30 %.

In the last section of the extruder 35 mbar reduced pressure is applied to remove part of the water as water vapour.

The water content of the granulates is 8.5 % as measured after they have equilibrated at room temperature. They are brought to a water content of 17 % by spraying water under stirring in a conventional mixer.

(c) The granulates of the pre-blended mixture as obtained under (b) ($H_2O$ content: 17 %) are fed through a hopper to an injection molding machine Arburg 329-210-750 for the production of tensile test pieces. The temperature profile of the barrel is: 90°C/ 175°C/ 175°C/ 175°C.

The shot weight is 7.3 g, the residence time 450 sec., the injection pressure 1650 bar, the back pressure 80 bar, the screw speed 180 rpm.

The tensile test pieces thus produced are conditioned in a climatic cabinet at 50 % R.H. for five days as an arbitrary standard condition.

The test pieces are of standard DIN design (DIN No. 53455).

(d) The conditioned tensile test pieces are then tested for their stress/strain behaviour on a Zwick tensile test apparatus as given in Example 1. Results are presented in Table 3.

## Table 3

| | unblended starch | Examples Nos. | | |
|---|---|---|---|---|
| | | 7 | 8 | 9 |
| Break Strain (%) | 22 | 150 | 25 | 370 |
| Break Energy $(KJ/m^2)$ | 325 | 1560 | 350 | 1830 |

## Example 8

(a) 9500 g of potato starch containing 15.1 % water are placed in a high speed mixer and 255 g of polyethylene-co-vinyl alcohol (component b) sold as EVAL-F 101 by Kuraray (containing 68 mole % vinyl alcohol and 32 mole % ethylene). 170 g of Nylon 12 (component c)) sold as Vestamid L-1700 by Huels Chemie; 51 g of hydrogenated fat (lubricant/release agent) Boeson VP and 25.5 g of a melt flow accelerator (lecithin/Metarin P) are added under stirring. The water content of the final mixture is 14 %.

(b) 9000 g of the mixture prepared under (a) are fed through a hopper into the same twin-screw co-rotating extruder described in Example 7. The extrusion of the mixture is carried out with the following temperature profile: 20°C/ 80°C/ 170°C/ 80°C. The other parameters of the extrusion experiment are the following:

material output:          9.1 kg/hr
screw speed:              200 rpm
water added:              1.4 kg/hr
reduced pressure (last section)    30 mbar
water-content during extrusion:    26.8 %

The water content of the granulates is 14.5 % as measured after they have equilibrated at room temperature. They are brought to a water content of 17 % $H_2O$ by spraying water under stirring in a conventional mixer.

(c) The granulates obtained under (b) are processed using the same injection molding machine described in (c) of Example 7. The temperature profile of the barrel is 90°C/ 155°C/ 155°C/ 155°C. The other processing parameters are:

shot weight:              8 g
residence time:           450 sec.
injection pressure;       2200 bar
back pressure:            80 bar
screw speed:              180 rpm

The tensile test pieces thus produced are conditioned and tested on a Zwick tensile test apparatus as described in (d) of Example 1.

Results are presented in Table 3.

### Example 9

(a) 2000 g of potato starch containing 15.2 % water are placed in a high speed mixer and 850 g of polyethylene-co-vinyl alcohol (component b) (EVAL-L-101 of Kuraray) containing 73 mole % vinyl alcohol and 27 mole % ethylene; 5950 g of polyamide-block-polyether (component c) sold as Pebax MA-4011 by Atochem; 17 g of hydrogenated fat (lubricant/ release agent) Boeson VP; 8.5 g of a melt flow accelerator (lecithin) Metarin P are added under stirring. The water content of the final mixture is 3.4 %.

(b) 8000 g of the mixture prepared under (a) are fed through a hopper into the same twin-screw co-rotating extruder described in Example 7.

The extrusion of the mixture is carried out with the following processing parameters:

| | |
|---|---|
| temperature profile: | 20°C/ 80°C/ 220°C/180°C |
| material output: | 8.8 kg/hr |
| screw speed: | 200 rpm |
| water added: | 1.8 kg/hr |
| reduced pressure (last section): | 33 mbar |
| water content during extrusion: | 21.1 % |

The water content of the granulates is 8.5 % after they have equilibrated at room temperature. They are brought back to a water content of 17 % $H_2O$ by spraying water under stirring in a conventional mixer.

(c) The granulates of (b) are processed using the same injection molding machine of Example 7. The processing parameters are the following:

| | |
|---|---|
| temperature profile: | 90°C/ 165°C/ 165°C/ 165°C |
| shot weight: | 6.6 g |
| residence time; | 450 sec |
| injection molding: | 1100 bar |
| back pressure; | 80 bar |
| screw speed: | 180 rpm |

The tensile test pieces thus produced are conditioned and tested on a Zwick tensile test apparatus described in (d) of Example 1.

Results are presented in Table 3.

### Example 10

Example 9 is repeated by replacing component c) with a thermoplastic polyurethane elastomer sold as Pellethane 2103-80-AEF by Dow Chemical Company. The resulting injection molded polymer is tougher than unblended starch polymer.

### Example 11

Example 7 is repeated but in addition to EVAL-L-101 (component b)) 170 g of polyethylene Lupolen 2410 T of BASF are added to the starch. The resulting injection molded polymer has stress-strain properties similar to the material obtained in Example 7 i.e. it is considerably tougher than the unblended starch polymer.

### Example 12

Example 8 is repeated but component c) is replaced by polyethylene-co-vinyl acetate (80 mole % ethylene, 20 mole % vinyl acetate), Escorene UL 02020 sold by Exxon.

The ratio of the components is varied as given in Table 4.

## Table 4

| Blend No. | starch: component b)+c) (weight ratio) | component b): component c) (weight ratio) |
|-----------|----------------------------------------|-------------------------------------------|
| 2 | 50 : 50 | 1 : 10 |
| 3 | 60 : 40 | 1 : 20 |
| 4 | 70 : 30 | 1 : 50 |
| 5 | 80 : 20 | 1 : 99 |
| 6 | 90 : 10 | 10 : 1 |
| 7 | 94 : 6 | 20 : 1 |
| 8 | 98 : 2 | 50 : 1 |
| 9 | 99 : 1 | 100 : 1 |

The resulting injection molded polymers are tougher than the unblended starch polymers.

Example 13

Example 1 (Sections a) and b)) is repeated except that the water content is adjusted to 22 %, and the cutter is removed from the die face. A continuous extrudate is obtained which is foamed as a result of the excess water evaporation. The foam is chopped into 30-40 mm lengths and is useful as a loose-fill, packaging insulation material.

Example 14

During each of the injection molding operations in Examples 2 - 12 an experiment is performed to demonstrate the utility of making foams. The molten material is obtained as described in Example 1 or 7, Sections a), b) and c) in each case is extruded into the open atmosphere (Section c) instead of being injection molded into a closed mold. In every case the material is converted into a foamed extrudate useful for loose-fill in packaging applications.

Example 15

The granulates from Example 1 or 7 are mixed with polystyrene in the proposition of 30 to 70 parts by weight and are treated according to Example 14. The resulting foamed extrudate contains a very fine and uniform cell structure suitable for a variety of uses including structural foam.

**Claims**

1. A composition consisting of
   a) destructurized starch produced by heating a starch having a water content of 5 to 40% by weight based on the starch/water component, in a closed volume under shear; and at a temperature of 105°C to 190°C above the glass transition and the melting points of its components and at a pressure of up to 150 x $10^5$ N/m² to form a melt whereby the pressure corresponds at a minimum to the vapour pressure of water at the temperature used and heating the melt for a time long enough to obtain a melting of the molecular structure of the starch granules and a homogenization of the melt;

b) at least an ethylene/vinylalcohol copolymer or a propylene/vinylalcohol copolymer, wherein the molar ratio of vinylalcohol units to alkylene is from 10:90 to 90:10 and which optionally further contain 5% to 20% polystyrene units calculated to the total weight of the polymer;

c) a thermoplastic polymer which undergoes melt formation at a set processing temperature within the range of 95°C to 190°C and is selected from (i) the group consisting of polyolefines, vinyl polymers, polystyrenes, polyacrylonitriles, polyacrylates, polymethacrylates, polyacetals, polyamides, thermoplastic polyesters, thermoplastic polyurethanes, polycarbonates, polyarylethers, thermoplastic polyimides, (ii) alkylene/vinyl ester-copolymers, ABS-copolymers, styrene/acrylonitrile-copolymers, alkylene/maleic anhydride-copolymers, acrylic acid esters/ acrylonitrile copolymers, acrylamide/acrylonitrile copolymers, block copolymers of amide-ethers, amide-esters, block copolymers of urethane-esters and mixtures thereof;

d) optionally one or more materials selected from the group consisting of fillers, lubricants, mold release agents, plasticizers, foaming agents, stabilizers, flow accelerators, coloring agents, pigments and mixtures thereof;

wherein the ratio of destructurized starch to component b) is from 1:99 to 99:1 and the sum of the components a) and b) is 90% or less and at minimum 10% by weight of the entire composition.

2. The composition according to claim 1 wherein the polymer of component b) is a ethylene/vinylalcohol copolymer.

3. The composition according to claim 2 wherein the molar ratio of vinylalcohol to ethylene units is from 50:50 to 85:15.

4. The composition according to claim 2 wherein the molar ratio of vinylalcohol to ethylene units is from 60:40 to 81:19.

5. The composition according to any one of the claims 1 to 4 wherein component c) is selected from (i) the group consisting of polyethylenes, polypropylenes, polyisobutylenes, poly(vinylchloride), poly(vinyl acetate), polystyrenes, polyamides, thermoplastic polyesters, thermoplastic polyurethanes, polycarbonates, poly(alkylene terephthalates), or (ii) the group consisting of ethylene vinyl acetate copolymers, styrene/acrylonitrile copolymers, ethylene/maleic anhydride copolymer, block copolymers of amide-ethers, amide esters, block copolymers urethane ethers, urethan-esters and mixtures thereof.

6. The composition according to any one of the claims 1 to 5 wherein the component b) is present in an amount of 50% or less by weight of the entire composition.

7. The composition according to any one of the claims 1 to 5 wherein the sum of the components b) and c) constitute 50% or less by weight of the total composition.

8. The composition according to any one of the claims 1 to 7 wherein the polymer of component c) absorbs water at a rate of less than 10% per 100 grams of the polymer at room temperature.

9. The composition according to any one of the claims 1 to 7 wherein the polymer of component c) absorbs water at a rate of less than 5% per 100 grams of the polymer at room temperature.

10. The composition according to any one of the claims 1 to 9 wherein the water content is from 5% to 30% by weight of the starch/water component.

11. The composition according to any one of the claims 1 to 9 wherein the water content is from 10% to 22% by weight of the starch/water component.

12. The composition according to any one of the claims 1 to 11 in the form of a melt.

13. The composition according to any one of the claims 1 to 11 in a solidified form.

14. The composition according to claim 13 in particulate, granulated or pelletized form.

15. The composition according to claim 13 in the form of a shaped article selected from the group consisting of containers, bottles, pipes, rods, packing materials, sheets, foams, films,sacks, bags and pharmaceutical capsules.

16. The composition according to claim 14 further melted and processed to form a shaped article selected from the group consisting of containers, bottles, pipes, rods, packing materials, sheets, foams, films, sacks, bags and pharmaceutical capsules.

17. The shaped articles according to claim 15 and claim 16 wherein the shaping process comprises foaming, filming, compression molding, injection molding, blow molding, extruding, co-extruding, vacuum forming, thermoforming and combinations thereof.

18. A thermoplastic destructurized starch product formed by the process comprising:
   1) providing a mixture consisting of:
      - a starch composed mainly of amylose and /or amylopectin and having a water content of from 5% to 40% by weight;
      - at least one polymer as defined in claim 1 as component b);
      - a thermoplastic polymer as defined in claim 1 as component c);
      - optionally one or more additives as defined in claim 1 as component c)
   wherein the ratio of destructurized starch to component b) is from 1:99 to 99:1 and the sum of the components a) and b) is 90% or less and at minimum 10% by weight of the entire composition,
   2) heating said mixture in the screw and barrel of an injection molding machine or an extruder at a temperature of 105°C to 190°C and at a pressure of up to 150 x $10^5$ N/m² to form a melt and heating the melt for a time long enough to obtain a destructurization of the starch and a homogenization of the melt ;
   3) shaping the melt into an article; and
   4) allowing the shaped article to cool to a solidified dimensionally stable article.

19. The product according to claim 18 wherein the heating temperature in step 2) is from 130°C to 190°C.

20. The product according to claim 18 in particulate, granulated or pelletized form.

21. The product according to claim 18 in the form of a shaped article selected from the group consisting of containers, bottles, pipes, rods, packing materials, sheets, foams, films,sacks, bags and pharmaceutical capsules.

22. The product according to claim 20 further melted and processed to form a shaped article selected from the group consisting of containers, bottles, pipes, rods, packing materials, sheets, foams, films, sacks, bags and pharmaceutical capsules.

**Patentansprüche**

1. Eine Zusammensetzung bestehend aus:
   a) destrukturierter Stärke hergestellt mittels Erwärmen einer Stärke mit einem Wassergehalt von 5 bis 40 Gewichts-%, bezogen auf den Stärke/Wasser - Bestandteil, in einem geschlossenen Volumen unter Scherung; und bei einer Temperatur von 105°C bis 190°C oberhalb der Glasübergangs- und der Schmelzpunkte ihrer Bestandteile und bei einem Druck von bis zu 150 x $10^5$ N/m², um eine Schmelze zu bilden, wobei der Druck mindestens dem Wasserdampfdruck bei den verwendeten Temperaturen entspricht und unter genügend langem Erwärmen der Schmelze, um eine Schmelzung der Molekularstruktur der Stärkegranulate und eine Homogenisierung der Schmelze zu erlangen;
   b) mindestens ein Äthylen/ Vinylalkohol Copolymer oder ein Propylen/ Vinylalkohol Copolymer, wobei das Molekularverhältnis der Vinylalkoholeinheiten zum Alkylen zwischen 10:90 und 90:10 liegt, und welches gegebenenfalls im weiteren 5 % bis 20 % Polystyroleinheiten, berechnet auf das Gesamtgewicht des Polymers, enthält;
   c) ein thermoplastisches Polymer, welches eine Schmelzbildung bei einer eingestellten Verfahrenstemperatur im Bereich von 95°C bis 190°C aufweist, und ausgewählt ist von (i) der Gruppe umfassend Polyolefine, Vinylpolymere, Polystyrole, Polyacrylnitrile, Polyacrylate, Polymethacrylate, Polyacetale, Polyamide, thermoplastische Polyester, thermoplastische Polyurethane, Polycarbonate, Polyaryläther, thermoplastische Polyimide, (ii) Alkylen/ Vinylester Copolymere, ABS - Copolymere, Styrol/ Acrylnitril Copolymere, Alkylen/ Maleinanhydrid Copolymere, Acrylsäureester/ Acrylnitril Copolymere, Acrylamid/ Acrylnitril Copolymere, Amidäther - Block - Copolymere, Amidester, Urethanester - Block - Copolymere und deren Mischungen;

d) gegebenenfalls ein oder mehrere Stoffe ausgewählt von der Gruppe umfassend Füllstoffe, Gleitmittel, Formtrennmittel, Plastifizierungsmittel, Schäumungsmittel, Stabilisatoren, Fliessmittel, Farbstoffe, Pigmente und deren Mischungen;

wobei das Verhältnis der destrukturierten Stärke zum Bestandteil b) zwischen 1:99 und 99:1 liegt und die Summe der Bestandteile a) und b) 90 % oder weniger und mindestens 10 %, bezogen auf das Gesamtgewicht der Zusammensetzung, beträgt.

2. Die Zusammensetzung nach Anspruch 1, wobei das Polymer des Bestandteils b) ein Äthylen/ Vinylalkohol Copolymer ist.

3. Die Zusammensetzung nach Anspruch 2, wobei das Molekularverhältnis des Vinylalkohols zu den Äthyleneinheiten zwischen 50:50 und 85:15 liegt.

4. Die Zusammensetzung nach Anspruch 2, wobei das Molekularverhältnis des Vinylalkohols zu den Äthyleneinheiten zwischen 60:40 und 81:19 liegt.

5. Die Zusammensetzung nach einem der vorhergehenden Ansprüche 1 bis 4, wobei der Bestandteil c) ausgewählt ist von (i) der Gruppe umfassend Polyäthylen, Polypropylen, Polyisobutylen, Poly(vinylchlorid), Poly(vinylacetat), Polystyrole, Polyamide, thermoplastische Polyester, thermoplastische Polyurethane, Polycarbonate, Poly(alkylenterephthalate), oder (ii) der Gruppe umfassend Äthylen-Vinylacetat Copolymere, Styrol/ Acrylnitril Copolymere, Äthylen/ Maleinanhydrid Copolymer, Amidäther -Block-Copolymere, Amidester, Urethanäther - Block - Copolymere, Urethanester und deren Mischungen.

6. Die Zusammensetzung nach einem der vorhergehenden Ansprüche 1 bis 5, wobei der Bestandteil b) in einer Menge von 50 % oder weniger, bezogen auf das Gesamtgewicht der Zusammensetzung, anwesend ist.

7. Die Zusammensetzung nach einem der vorhergehenden Ansprüche 1 bis 5, wobei die Summe der Bestandteile b) und c) 50 % oder weniger, bezogen auf das Gesamtgewicht der Zusammensetzung, beträgt.

8. Die Zusammensetzung nach einem der vorhergehenden Ansprüche 1 bis 7, wobei das Polymer des Bestandteils c) bei Zimmertemperatur Wasser in einer Menge von weniger als 10 % pro 100 Gramm Polymer absorbiert.

9. Die Zusammensetzung nach einem der vorhergehenden Ansprüche 1 bis 7, wobei das Polymer des Bestandteils c) bei Zimmertemperatur Wasser in einer Menge von weniger als 5 % pro 100 Gramm Polymer absorbiert.

10. Die Zusammensetzung nach einem der vorhergehenden Ansprüche 1 bis 9, wobei der Wassergehalt zwischen 5 % und 30%, bezogen auf das Gewicht des Stärke/Wasser - Bestandteils, liegt.

11. Die Zusammensetzung nach einem der vorhergehenden Ansprüche 1 bis 9, wobei der Wassergehalt zwischen 10 % und 22%, bezogen auf das Gewicht des Stärke/Wasser - Bestandteils, liegt.

12. Die Zusammensetzung nach einem der vorhergehenden Ansprüche 1 bis 11 in Form einer Schmelze.

13. Die Zusammensetzung nach einem der vorhergehenden Ansprüche 1 bis 11 in fester Form.

14. Die Zusammensetzung nach Anspruch 13 in körniger, granulierter oder tablettierter Form.

15. Die Zusammensetzung nach Anspruch 13 in Form eines geformten Gegenstands ausgewählt von der Gruppe umfassend Behälter, Flaschen, Rohre, Stäbe, Verpackungsmaterialien, Folien, Schäume, Filme, Säcke, Beutel und pharmazeutische Kapseln.

16. Die Zusammensetzung nach Anspruch 14 weiter geschmolzen und verarbeitet, um einen geformten Gegenstand zu bilden, ausgewählt von der Gruppe umfassend Behälter, Flaschen, Rohre, Stäbe, Verpackungsmaterialien, Folien, Schäume, Filme, Säcke, Beutel und pharmazeutische Kapseln.

**17.** Die geformten Gegenstände nach Anspruch 15 und Anspruch 16, wobei der Formungsvorgang Schäumen, Filmen, Pressformen, Spritzgiessen, Blasformen, Extrudieren, Coextrudieren, Vakuumformen, Thermoformen und deren Kombinationen umfasst.

**18.** Ein Produkt aus thermoplastischer destrukturierten Stärke geformt durch das Verfahren umfassend:
1) Vorlegen einer Mischung umfassend:
   - eine Stärke, hauptsächlich bestehend aus Amylose und/oder Amylopektin und mit einem Wassergehalt von 5 bis 40 Gewichts-%;
   - mindestens ein Polymer, wie in Anspruch 1 als Bestandteil b) definiert;
   - ein thermoplastisches Polymer, wie in Anspruch 1 als Bestandteil c) definiert;
   - gegebenenfalls ein oder mehrere Zusatzstoffe, wie in Anspruch 1 als Bestandteil c) definiert;
wobei das Verhältnis der destrukturierten Stärke zum Bestandteil b) zwischen 1:99 und 99:1 liegt und die Summe der Bestandteile a) und b) 90 % oder weniger und mindestens 10 %, bezogen auf das Gesamtgewicht der Zusammensetzung, beträgt,
2) Erwärmen der besagten Mischung in der Schnecke und der Trommel einer Spritzgiessvorrichtung oder einer Extrudiervorrichtung bei einer Temperatur von 105°C bis 190°C und bei einem Druck von bis zu 150 x 10$^5$ N/m$^2$, um eine Schmelze zu formen und genügend langes Erwärmen, um eine Destrukturierung der Stärke und eine Homogenisierung der Schmelze zu erreichen;
3) Formen der Schmelze zu einem Gegenstand; und
4) Abkühlen lassen des geformten Gegenstands zu einem erstarrten dimensionsstabilen Gegenstand.

**19.** Das Produkt nach Anspruch 18, wobei die Erwärmungstemperatur in Stufe 2) zwischen 130°C und 190°C liegt.

**20.** Das Produkt nach Anspruch 18 in körniger, granulierter oder tablettierter Form.

**21.** Das Produkt nach Anspruch 18 in Form eines geformten Gegenstands ausgewählt von der Gruppe umfassend Behälter, Flaschen, Rohre, Stäbe, Verpackungsmaterialien, Folien, Schäume, Filme, Säcke, Beutel und pharmazeutische Kapseln.

**22.** Das Produkt nach Anspruch 20 weiter geschmolzen und prozessiert, um einen geformten Gegenstand zu bilden, ausgewählt von der Gruppe umfassend Behälter, Flaschen, Rohre, Stäbe, Verpackungsmaterialien, Folien, Schäume, Filme, Säcke, Beutel und pharmazeutische Kapseln.

## Revendications

**1.** Une composition comprenant
a) de l'amidon déstructuré produit par le chauffage d'un amidon ayant une teneur en eau de 5 à 40% en poids, par rapport au constituant amidon/eau, dans un volume clos sous action de cisaillement; et à une température de 105°C à 190°C au-dessus des points de transition vitreuse et de fusion de ses constituants et à une pression allant jusqu'à 150 x 10$^5$ N/m$^2$ pour former une masse fondue, laquelle pression correspond au minimum à la pression de vapeur de l'eau à la température employée et chauffage de la masse fondue pendant un temps assez long afin d'obtenir une fusion de la structure moléculaire des granules d'amidon et une homogénéisation de la masse fondue;
b) au moins un éthylène/ vinylalcool copolymère ou un propylène/ vinylalcool copolymère, caractérisé en ce que la proportion molaire des unités du vinylalcool par rapport à l'alkylène est de 10:90 à 90:10 et qui contient optionnellement en plus entre 5% et 20% d'unités de polystyrène, calculé par rapport au poids total du polymère;
c) un polymère thermoplastique qui subit une formation d'une masse fondue à une température de procédé réglée entre 95°C et 190°C, et choisi dans (i) le groupe comprenant polyoléfines, polymères de vinyle, polystyrènes, polyacrylonitriles, polyacrylates, polyméthacrylates, polyacétales, polyamides, polyesters thermoplastiques, polyuréthannes thermoplastiques, polycarbonates, polyaryléthers, polyimides thermoplastiques, (ii) alkylène/ ester de vinyle copolymères, ABS-copolymères, styrène/ acrylonitrile copolymères, alkylène/ anhydride maléïque copolymères, esters d'acide acrylique/ acrylonitrile copolymères, acrylamide/ acrylonitrile copolymères, bloc - copolymères d'amide-éthers, esters d'amide, bloc - copolymères d'esters d'uréthanne et leurs mélanges;
d) en option une ou plusieurs matières choisies dans le groupe comprenant des charges minérales (fillers), des lubrifiants, des agents de démoulage, des plastifiants, des agents moussants, des stabilisateurs, des accélérateurs de coulée, des colorants, des pigments et leurs mélanges;
caractérisée en ce que la proportion de l'amidon déstructuré par rapport au constituant b) est de 1:99 à 99:1 et en ce que la somme des constituants a) et b) est de 90% ou moins et au minimum de 10%, par rapport au poids total de la composition.

2. La composition selon la revendication 1, caractérisée en ce que le polymère du constituant b) est un éthylène/ vinylalcool copolymère.

3. La composition selon la revendication 2, caractérisée en ce que la proportion molaire du vinylalcool par rapport aux unités d'éthylène est de 50:50 à 85:15.

4. La composition selon la revendication 2, caractérisée en ce que la proportion molaire du vinylalcool par rapport aux unités d'éthylène est de 60:40 à 81:19.

5. La composition selon l'une quelconque des revendications 1 à 4, caractérisée en ce que le constituant c) est choisi dans (i) le groupe comprenant polyéthylènes, polypropylènes, polyisobutylènes, poly(vinylchlorure), poly(vinylacétate), polystyrènes, polyamides, polyesters thermoplastiques, polyuréthannes thermoplastiques, polycarbonates, poly(alkylène téréphtalates), ou (ii) le groupe comprenant éthylène vinylacétate copolymères, styrène/ acrylonitrile copolymères, éthylène/ anhydride maléïque copolymère, bloc - copolymères d'amide-éthers, esters d'amide , bloc-copolymères d'uréthanne-éthers, esters d'uréthanne et leurs mélanges.

6. La composition selon l'une quelconque des revendications 1 à 5, caractérisée en ce que le constituant b) est présent en une quantité de 50% ou moins, par rapport au poids total de la composition.

7. La composition selon l'une quelconque des revendications 1 à 5, caractérisée en ce que la somme des constituants b) et c) constitue 50% ou moins, par rapport au poids total de la composition.

8. La composition selon l'une quelconque des revendications 1 à 7, caractérisée en ce que le polymère du constituant c) absorbe de l'eau à un taux inférieur à 10% par 100 grammes de polymère à température ambiante.

9. La composition selon l'une quelconque des revendications 1 à 7, caractérisée en ce que le polymère du constituant c) absorbe de l'eau à un taux inférieur à 5% par 100 grammes de polymère à température ambiante.

10. La composition selon l'une quelconque des revendications 1 à 9, caractérisée en ce que la teneur en eau est de 5% à 30%, par rapport au poids du constituant amidon/eau.

11. La composition selon l'une quelconque des revendications 1 à 9, caractérisée en ce que la teneur en eau est de 10% à 22%, par rapport au poids du constituant amidon/eau.

12. La composition selon l'une quelconque des revendications 1 à 11 sous forme d'une masse fondue.

13. La composition selon l'une quelconque des revendications 1 à 11 sous forme solide.

14. La composition selon la revendication 13 sous forme de particules, de granules ou de pastilles.

15. La composition selon la revendication 13 sous forme d'un article façonné choisi dans le groupe comprenant des récipients, des bouteilles, des tubes, des tiges, des emballages, des feuilles, des mousses, des films, des sacs, des sachets et des capsules pharmaceutiques.

16. La composition selon la revendication 14 fondue à nouveau et traitée pour former un article façonné choisi dans le groupe comprenant des récipients, des bouteilles, des tubes, des tiges, des emballages, des feuilles, des mousses, des films, des sacs, des sachets et des capsules pharmaceutiques.

17. Les articles façonnés selon la revendication 15 et la revendication 16 caractérisés en ce que le procédé de façonnage comprend moussage, extrusion de films, moulage par compression, moulage par injection, moulage par soufflage, extrusion, coextrusion, formage sous vide, thermoformage et leurs combinaisons.

**18.** Un produit d'amidon thermoplastique déstructuré formé par le procédé comprenant:

1) fourniture d'un mélange comprenant:
- un amidon, essentiellement formé d'amylose et/ou d'amylopectine et ayant une teneur en eau entre 5% et 40% en poids;
- au moins un polymère, comme défini dans la revendication 1, en tant que constituant b);
- un polymère thermoplastique, comme défini dans la revendication 1, en tant que constituant c);
- en option un ou plusieurs additifs, comme défini dans la revendication 1, en tant que constituant c);

caractérisé en ce que la proportion de l'amidon déstructuré par rapport au constituant b) est de 1:99 à 99:1 et caractérisé en ce que la somme des constituants a) et b) est de 90% ou moins et au minimum 10%, par rapport au poids total de la composition.

2) chauffage du dit mélange dans une vis et un fût d'un appareil de moulage par injection ou d'extrusion à une température comprise entre 105°C et 190°C et à une pression allant jusqu'à 150 x 10$^5$ N/m$^2$ pour former une masse fondue et chauffage de la masse fondue pendant un temps assez long afin d'obtenir une déstructuration de l'amidon et une homogénéisation de la masse fondue;

3) façonnage de la masse fondue en un article; et

4) laisser l'article façonné refroidir en un article solide dimentionnellement stable.

**19.** Le produit selon la revendication 18 caractérisé en ce que la température de chauffage dans l'étape 2) est comprise entre 130°C et 190°C.

**20.** Le produit selon la revendication 18 sous forme de particules, de granules ou de pastilles.

**21.** Le produit selon la revendication 18 sous forme d'un article façonné choisi dans le groupe comprenant des récipients, des bouteilles, des tubes, des tiges, des emballages, des feuilles, des mousses, des films, des sacs, des sachets et des capsules pharmaceutiques.

**22.** Le produit selon la revendication 20 fondu à nouveau et traité pour former un article façonné choisi dans le groupe comprenant des récipients, des bouteilles, des tubes, des tiges, des emballages, des feuilles, des mousses, des films, des sacs, des sachets et des capsules pharmaceutiques.